# EUROPÄISCHE PATENTSCHRIFT

(11) **EP 3 480 086 B1**
(45) Veröffentlichungstag und Bekanntmachung des Hinweises auf die Patenterteilung: **30.12.2020**
(21) Anmeldenummer: 18182806.2
(22) Anmeldetag: 10.07.2018
(51) Int. Cl.: B62D 25/20, B62D 33/02, B60P 3/075

(54) **BODENBLECH UND BODENPROFIL, INSBESONDERE ALS AUFSTANDSFLÄCHE FÜR ZU TRANSPORTIERENDE FAHRZEUGE**
FLOOR PANEL AND FLOOR PROFILE, IN PARTICULAR AS RESTING SURFACE FOR VEHICLES TO BE TRANSPORTED
TÔLE DE FOND ET PROFILÉ DE FOND, EN PARTICULIER EN TANT QUE SURFACES D'APPUI POUR VÉHICULES À TRANSPORTER

(30) Priorität: 01.11.2017 DE 202017106623 U
(43) Veröffentlichungstag der Anmeldung: 08.05.2019
(73) Patentinhaber: Moetefindt Fahrzeugbau GmbH & Co. KG, 21244 Buchholz (DE)
(72) Erfinder: Medrow, Malte, 21244 Buchholz (DE)
(74) Vertreter: Müller Schupfner & Partner Patent- und Rechtsanwaltspartnerschaft mbB

(56) Entgegenhaltungen:
- EP-A1- 2 163 321
- EP-A2- 2 505 460
- DE-T2- 69 305 846
- DE-U1- 29 601 819
- US-A- 6 022 062

## Beschreibung

Die vorliegende Erfindung betrifft ein Bodenblech, insbesondere zur Verwendung als Aufstandsfläche für mit Reifen versehene Fahrzeuge. Derartige Bodenbleche sind insbesondere als Aufstandsfläche zum Transport von Fahrzeugen auf der Ladefläche eines Lastkraftwagens, eines Zuges oder eines Anhängers, der wiederum von einem Kraftfahrzeug gezogen wird, bestimmt. Weitere Anwendungen sind die Aufstandsflächen von Parkdecks, Auffahrten oder Parklifts, z.B. wenn diese als Doppelparker ausgestaltet sind. Eine bevorzugte Anwendung betrifft Lastkraftwagen, Züge oder Anhänger zum Autotransport. Das Bodenblech ist insbesondere Bestandteil eines Bodenprofils. Entsprechende Bodenprofile können zu Bodenplanken zusammengefügt werden.

### Stand der Technik

Bodenbleche, insbesondere zur Aufnahme von Ladegütern oder zum Begehen, müssen in besonderem Maße gehsicher und rutschfest sein. Hierzu ist es bekannt, metallische Bodenbleche zur Erhöhung der Rutschsicherheit mit Erhebungen zu versehen. Eine bekannte Ausführungsform solcher Bodenbleche sind Riffelbleche. Als Riffelblech bezeichnet man Bleche (aus Stahl, Edelstahl, Aluminium o. ä.) mit diagonal gerippter Struktur. Dies dient in erster Linie zur Verbesserung der Rutschfestigkeit. Die Riffelung wird bei der Herstellung des Blechs durch die hohe Kraft von Umformwalzen aufgebracht. Im Laufe der Zeit wurden weitere Formen und Strukturen geschaffen, die denselben Zweck erfüllen. Sehr verbreitet sind z.B. Tränenbleche, Warzenbleche oder Linsenbleche. Je nach Blechart sind bei diesen ein bis fünf spitz zulaufende Rippen als versetztes Karomuster angeordnet.

Weiterhin bekannt sind Sandbleche, welche Ihren Einsatz z.B. dort finden, wo Fahrzeuge in einem weichen Boden versinken würden. Sandbleche können auch zur Befestigung von Landebahnen für Kleinflugzeuge verwendet werden. Sandbleche haben eine längliche Rechtecksform und weisen Durchbrechungen auf. Zur Stabilisierung haben die Sandbleche häufig ein Wellenprofil, wobei die Wellen die Form eines rechtwinkligen umgekehrten "U" haben und Welle und Rinne abwechselnd parallel zur längeren Kante (Längsrichtung) verlaufen.

Auf der Stirnseite des "U" sind Durchbrechungen angeordnet, welche nach unten einen Stanzgrad oder einen tiefergezogenen Rand aufweisen. Die Durchbrechung liegt in einer Ebene parallel zur Aufstandsfläche des Sandblechs.

Es ist bekannt, perforierte Bodenprofile auf die Tragkonstruktion eines Fahrzeugs zur Ausbildung einer Ladefläche zu montieren. Derartige Belagselemente sind z.B. in der DE 69305846 T2 offenbart. Hier wird ein Belagselement aus gefalztem Blech mit einer Querfolge von Plateaubereichen und Rinnen hergestellt. Die Rinne hat z.B. die Form eines nach oben offenen gleichschenkligen Trapezes, wobei die Seitenwände des Trapezes auch konvex oder konkav gekrümmte Querschnitte aufweisen können. Die obere Stirnfläche der Plateau-Bereiche ist nach einer Ausgestaltung perforiert. Die Durchbrechungen weisen eine nach oben gerichtete Stanzkante auf und liegen in einer Ebene.

Bodenprofile welche Wellenkämme mit durch Strangformgebung eingebrachten regelmäßige Vertiefungen aufweisen (aber keine Durchbrechungen) sind aus der EP 2163321 A1 bekannt. Die US 6022062 A sieht Wellenkämme mit höheren und tieferen Zonen vor, so dass sich Bereiche ergeben, in denen das Wellenprofil insgesamt abgesenkt ist. Die Wellen weisen aber keine Durchbrechungen auf. Die EP 2505460 A2 betrifft dagegen Ausnehmungen auf den Wellenkämmen, wobei die Hauptachse der Ausnehmung mit der Laufrichtung der Welle bzw. senkrecht zur Hauptachse der Welle verläuft.

### Aufgabe der Erfindung

Aufgabe der vorliegenden Erfindung ist es, verbesserte Bodenbleche zu schaffen, insbesondere rutschfestere. Auf Autoanhängern oder Autotransportern tritt das Problem auf, dass die verladenen Fahrzeuge, z.B. durch Bodenwellen, in Schwingungen geraten können und sich dann trotz Vergurtung auf der Ladefläche bewegen können, insbesondere die Bewegung quer zur Fahrtrichtung ist hier problematisch. Verstärkt wird dieses Problem, weil viele moderne Fahrzeuge heutzutage Stoßdämpfer aufweisen, die nur dann regelgerecht funktionieren, wenn das Fahrzeug in Betrieb ist, nicht aber im Stand bei ausgeschaltetem Motor oder ausgeschalteter Bordelektrik.

Auch soll das Profil der Aufstandsfläche die Reifen während des Transports nicht beschädigen, insbesondere wenn es sich um sogenannte Slicks oder Intermediates von im Rennsport genutzten Fahrzeugen handelt. Slicks sind profillose und Intermediates profilarme Reifen, geeignet für den Einsatz auf trockenen bzw. leicht feuchten Rennstrecken. Die Reifen von Rennfahrzeugen sollen i.d.R. auf der Rennstrecke erhöhte Betriebstemperaturen erreichen und sind dann noch heiß und besonders weich, d.h. empfindlich, wenn diese z.B. relativ unmittelbar nach einem Rennen auf einen Anhänger oder die Ladefläche eines Lastkraftwagens gefahren werden.

### Zusammenfassung der Erfindung

Diese und weitere Aufgaben werden durch die vorliegende Erfindung in vorteilhafter Weise gelöst. Die vorliegende Erfindung betrifft ein Bodenblech, welches eine Vielzahl von Wellen und eine Vielzahl von Durchbrechungen aufweist, die Wellen jeweils einen Wellenkamm als Teil der Welle mit beidseits des Wellenkamms abfallenden Wellenwänden aufweisen und die Durchbrechungen abschnittsweise im Bereich des Wellenkamms vorgesehen sind, wobei die Durchbrechungen zumindest weiterhin auch eine der abfallenden Wellenwände beidseits des Wellenkamms zumindest teilweise ausnehmen, vorzugsweise beide, insbesondere eine oder beide zu mehr als der Hälfte der Höhe der abfallenden Wellenwände.

Die Durchbrechungen befinden sich vorzugsweise zumindest in jedem zweiten Wellenkamm, insbesondere in jedem Wellenkamm.

Kennzeichnend für die Erfindung ist, dass die Durchbrechungen sich jeweils nicht nur in einer Ebene befinden, sondern sich über unterschiedliche Höhen der Welle erstrecken.

Die Wellen bilden im Schnitt (im rechten Winkel zum Wellenkamm) ein (erstes) Wellenprofil, wobei die Wellen durch runde Übergänge, etwa wie bei einem Wellblech, und/oder durch winkeliges Abknicken geschaffen werden, wie bei einem Trapezblech. Ebenso möglich sind Wellen in Rechtecksform, Trapezform oder Dreiecksform oder Kombinationen dieser Formen. Insbesondere läuft zumindest der Wellenkamm oben rund aus. Wenn vorliegend (nur) von einem Wellenprofil oder Wellenkamm usw. gesprochen wird, ist das erste Wellenprofil und der erste Wellenkamm gemeint.

Vorzugsweise bildet sich in einem Schnitt entlang des jeweiligen Wellenkamms ein zweites Wellenprofil aus mit Übergängen, insbesondere mit runden Übergängen, von (zweitem) Wellental zu (zweitem) Wellenkamm, wobei bei diesem Schnitt die Durchbrechung das Wellental und der stehengebliebene Wellenkamm einen zweiten Wellenkamm bilden.

Nach einer Ausführungsform sind die Durchbrechungen von Wellenkamm zu Wellenkamm in einer Linie angeordnet. Nach einer anderen Ausführungsform sind die Durchbrechungen von Wellenkamm zu Wellenkamm versetzt, z.B. alternierend, angeordnet.

Die Höhe auf der einen und auf der anderen Seite eines Wellenkammes ist gekennzeichnet, durch die Differenz (in Bezug auf die Flächennormale) von dem höchsten Punkt einer Welle auf dem Wellenkamm zum tiefsten Punkt der Wellenwand folgend der Welle vom Wellenkamm zur jeder der beiden abfallenden Wellenwände beidseits des Wellenkamms, wobei der tiefste Punkt in der Wellenwand der (erste) Punkt ist, wo das Gefälle null wird (und z.B. in der Waagerechten weiterläuft) bzw. die abfallende Wellenwand wieder ansteigt. Nach diesem Punkt wird die ansteigende oder waagerechte Wellenwand Wellental genannt.

Das Bodenblech ist insbesondere Teil eines selbstragenden Bodenprofils. Die Kopffläche des Bodenprofils wird hierbei von dem Bodenblech gebildet. Auf der der Aufstandsfläche gegenüberliegenden Seite des Bodenblechs sind Stützglieder vorgesehen, die sich von dem Bodenblech wegerstrecken, wobei die Stützglieder Bodenblech und Fußfläche verbinden und die Stützglieder vorzugsweise als Stützwände ausgebildet sind. Insbesondere ist im Bereich jeden Wellentals ein Stützglied angeordnet.

### Detaillierte Beschreibung der Erfindung

Die Durchbrechungen in dem Bodenblech haben senkrecht von oben betrachtet vorzugsweise eine runde oder ovale Form, insbesondere eine ovale Form. Es sind aber auch rechteckige, trapezförmige oder sechseckige Durchbrechungen möglich.

Insbesondere weisen die Durchbrechungen jeweils auf beiden Seiten des Wellenkammes zur Hauptachse der Welle bzw. des Wellenkammes in etwa parallel verlaufende gerade Kanten auf, z.B. weil die Durchbrechungen oval sind und die Form einer liegenden 0 haben (vorzugsweise mit zwei parallelen Kanten). Insbesondere sind diese Kanten material verstärkt, vorzugsweise weil eine Materialverdickung in Form einer Rippe rechts und links parallel zum Wellenkamm verläuft.

Das Verhältnis des Durchmessers bzw. der Länge d der Durchbrechungen entlang bzw. parallel zu einer Linie auf dem Wellenkamm (an der längsten Stelle der Durchbrechungen) relativ zum Abstand der Durchbrechungen a entlang des Wellenkamms (d.h. auf derselben Linie) beträgt (ggf. im Mittel) etwa von 1: 4 bis 4:1, vorzugsweise etwa 3 : 1 bis 1 : 1.

Bei dem Bodenblech wird im Aufstandsbereich mehr als 30%, vorzugsweise mehr als 40%, der Fläche senkrecht von oben betrachtet - d.h. nur die Flächenanteile in einer horizontalen Ebene zählen (in Bezug auf die Fläche im Aufstandsbereich, d.h. einschließlich Durchbrechung, Wellenkamm, Wellental, und Wellenwand) - durch Wellenkämme, einschließlich der Wellenwände bis zu dem Punkt, wo die Wellenwand in ein Wellental übergeht, insbesondere bis zur halben Höhe, gebildet.

Von der Gesamtfläche des Bodenblechs, die sich senkrecht von oben betrachtet in einer Ebene ergibt, beträgt das Verhältnis der Flächen, die durch die Durchbrechungen auf den Wellenkämmen ausgenommen werden, zu den Flächen, die stehen geblieben sind, vorzugsweise 1 : 10 bis 1 : 2, besonders bevorzugt 1 : 7 bis 1 : 3.

Das Bodenblech hat nach einer Ausgestaltung eine längliche rechtwinklige Form, wobei die Wellen bzw. Wellenkämme parallel zur kürzeren Kantenlänge verlaufen,

Bodenblech und Bodenprofil sind aus Metall oder Kunststoff hergestellt. Als Metalle sind insbesondere Leichtmetalle geeignet, insbesondere Aluminium oder Aluminiumlegierungen. Als Kunststoffe sind insbesondere faserverstärkte Kunststoffe zu nennen.

Bodenbleche und Bodenprofile aus Metall lassen vorzugsweise durch Strangpressen herstellen. Beim Strangpressen wird ein auf Umformtemperatur erwärmter Pressling (Block) mit einem Stempel durch eine Matrize gedrückt. Das Strangpressen dient zur Herstellung von länglichen Materialien, die in der gewünschten Länge abgetrennt werden. Bodenbleche und Bodenprofile aus Kunststoff lassen sich durch Extrusion herstellen.

Die Durchbrechungen werden z.B. durch spanabtragende Metallbearbeitung in die Bodenbleche bzw. Bodenprofile eingebracht.

Insbesondere sind mehrere Bodenprofile zu Bodenplanken kuppelbar. Hierfür weisen die Bodenprofile nach einer bevorzugten Ausführungsform an Ihren Seitenkanten ineinandergreifende Kupplungsglieder auf.

Die Bodenbleche, Bodenprofile oder Bodenplanken werden insbesondere für den Transport von Fahrzeugen mit Reifen genutzt.

Es hat sich überraschend gezeigt, dass sich die Reifen der zu transportierenden Fahrzeuge gut an den Durchbrechungen, welche sich nicht nur über eine Ebene erstrecken, festlegen lassen und verrutschsicherer als auf normalen flachen Bodenplanken mit Durchbrechungen transportierbar sind. Die Fahrzeugachse bzw. Radachse verläuft dabei in etwa parallel zu den (ersten) Wellenkämmen. Auch schonen die Aufstandsflächen der erfindungsgemäßen Bodenbleche die Reifen, vergleichen mit Profilen, wo die Durchbrechungen nach oben gerichtete Grate oder Umstülpungen, wie sich durch Umformen entstehen, aufweisen.

Vorzugsweise sind die Wellentäler und Wellenkämme hierbei u.a. hinsichtlich des Höhenunterschiedes so ausgebildet, dass ein gewichtsbelasteter Reifen gleichzeitig zumindest auf einem Wellenkamm und auf einem benachbarten Wellental aufsteht.

Die Bodenprofile oder Bodenplanken sind selbsttragend und lassen sich auf einer Unterkonstruktion eines Anhängers oder Kraftfahrzeuges, insbesondere Lastkraftwagens, montieren bzw. mit dieser verschweißen. Die Bodenprofile oder Bodenplanken bilden dann die Ladefläche, wobei das Bodenblech mit der Vielzahl von Wellen und Durchbrechungen, die Aufstandsfläche bildet.

Die Erfindung wird durch nachfolgende Figuren erläutert, ohne auf diese beschränkt zu sein: Es zeigen:
- Fig. 1: eine perspektivische Ansicht eines Ausschnitts aus einem Bodenblech entlang eines durchbrochenen Wellenkammes;
- Fig. 2: den Ausschnitt aus einem Bodenblech nach Fig. 1 in einer Draufsicht;
- Fig. 3: einen Schnitt entlang einer Linie auf der Spitze des Wellenkammes des Bodenblechs nach Fig. 2;
- Fig. 4: einen Schnitt senkrecht zum Verlauf des Wellenkammes des Bodenblechs nach Fig. 2, dort wo keine Durchbrechung ist;
- Fig. 5: einen Schnitt senkrecht zum Verlauf des Wellenkammes des Bodenblechs nach Fig. 2, dort wo eine Durchbrechung ist;
- Fig. 6: eine perspektivische Ansicht eines Bodenprofils;
- Fig. 7: einen Schnitt durch das Bodenprofil senkrecht zum Verlauf der Wellenkämme;
- Fig.8: einen auf einer Bodenplanke verzurrten Reifen;
- Fig.9: einen Ausschnitt aus Fig.8, dort wo der Reifen auf dem Bodenblech aufsteht; und
- Fig. 10: eine Skizze zur Erläuterung der Begrifflichkeiten.

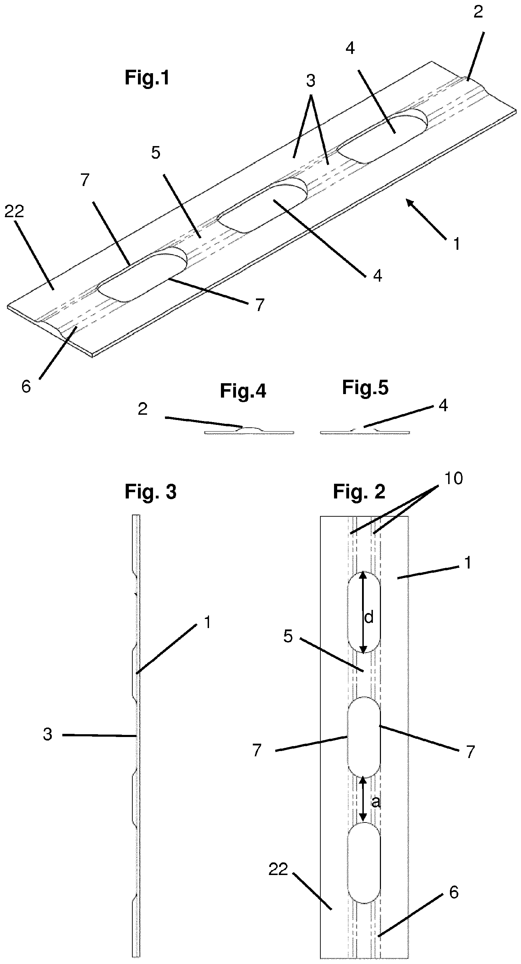

**Fig.1** gibt einen Ausschnitt aus einem Bodenblech 1 mit einem Wellenkamm 5 und jeweils beidseitig von diesem abfallenden Wellenwänden 6, die jeweils in ein Wellental 22 übergehen, wieder. Die beiden Wellentäler 22 liegen in einer Ebene. Jede Wellenwand läuft flach in einem Wellental aus. Das Wellental 22 ist weitgehend eben ausgebildet. Mehrere Wellentäler 22 formen so im Wesentlichen eine planparallele Fläche. In dem Wellenkamm 5 sind drei Durchbrechungen 4 gezeigt. Die Durchbrechungen haben jeweils die Form eines Ovals. Jede der Durchbrechungen 4 weist zwei parallele Kanten 7 auf.

Die **Fig. 2 bis 5** geben weitere Ansichten des Ausschnittes des bzw. der Schnitte durch das Bodenblech 1 nach Fig. 1 wieder. Fig. 2 zeigt das Bodenblech 1 in einer Draufsicht. Fig. 3 zeigt einen Schnitt entlang dem Wellenkamm 5. Die Durchbrechungen bilden hier die zweiten Wellentäler. Fig. 4 und 5 wiederum geben Schnitte senkrecht zum Verlauf des Wellenkammes 5 wieder, einmal dort wo keine Durchbrechung ist (Fig. 4) und einmal dort, wo eine Durchbrechung 4 ist (Fig. 5).

Die Durchbrechungen 4 haben eine maximale Länge d und einen minimalen Abstand a. Als Länge d haben sich 30 bis 80 mm als zweckmäßig erwiesen, insbesondere etwa 50 mm. Die parallelen Kanten 7 der Durchbrechung sind insbesondere 10 bis 35 mm, insbesondere etwa 22 mm, voneinander entfernt. Wie aus der Figur 2 und 3 ersichtlich ergibt sich jeweils ein auf und ab verlaufendes erstes und zweites Wellenprofil und zwar in zwei zueinander senkrechten Richtungen.

Auf der Welle 2 sind parallel zum Wellenkamm 5 jeweils zusätzlich Rippen 10 als Materialerhöhung vorgesehen, um die Aufstandsflächen 3 zusätzlich mit einem strukturierten Profil zu versehen.

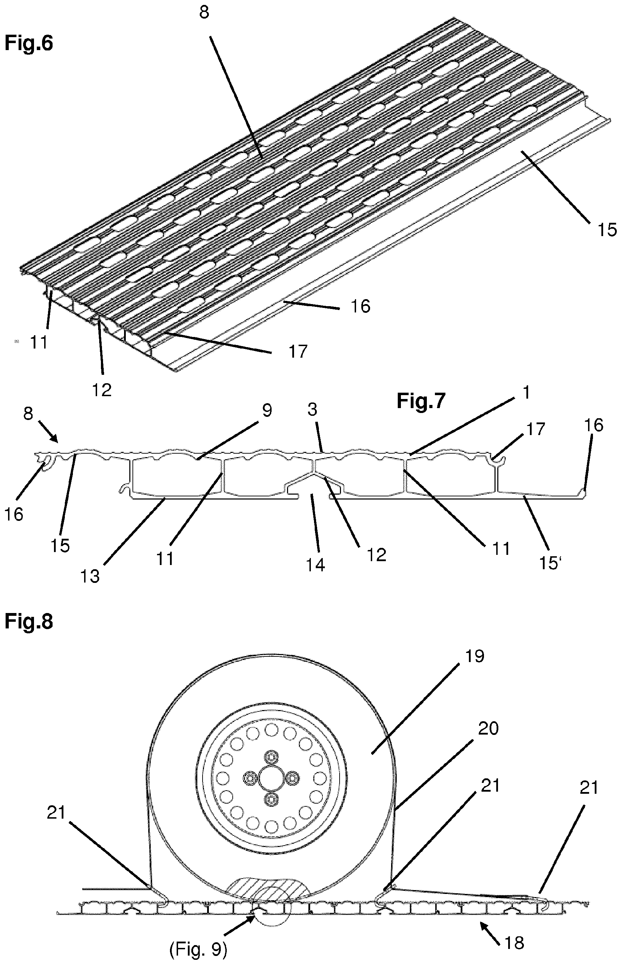

Wie aus **Fig. 6** und **7** ersichtlich besteht das Bodenprofil 8 oben aus dem Bodenblech 1 und unten aus der Fußfläche 13. Zwischen dem Bodenblech 1 und der Fußfläche 13 verlaufen Stützwände 11, die auch als Stützbrücke 12 ausgebildet sein können. Diese sind jeweils im Bereich der Wellentäler 22 angeordnet. In die Ausnehmungen 14 in der Fußfläche unter den Stützbrücken können Montagescheinen, die mit Gewindebohrungen versehen sind, eingeschoben werden. Die Montagescheinen können mit der Konstruktion z.B. eines Fahrzeug- oder Anhängerchassis verschraubt werden. An den Seiten weist das Bodenprofil Kupplungsarme 15 auf, um zwei und mehr Bodenprofile 8 zu einer Bodenplanke 18 formschlüssig zusammenfügbar zu machen. Hierfür greifen parallel zum Wellenkamm 5 verlaufende Kupplungsstege 16 in parallel zum Wellenkamm verlaufende Kupplungsschienen 17 ein. Auf jeder Längsseite des Bodenprofiles ist jeweils ein Kupplungsarm 15. Am Ende des Kupplungsarms 15 ist der Kupplungssteg 16 und am Anfang die Kupplungsschiene 17. Einer der Kupplungsarme 15 ist Teil der Fußfläche (15') und der andere Kupplungsarm 15 Teil des Bodenblechs 1.

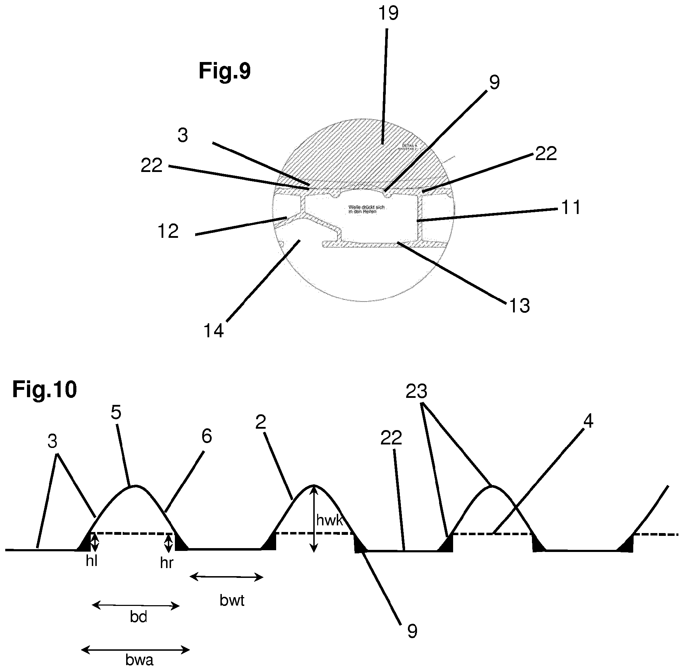

In **Fig. 8** und **9** ist gezeigt, wie ein Reifen 19 auf dem Bodenblech 1 bzw. der Bodenplanke 18 aufsteht und festgezurrt werden kann. Hierzu wird ein Befestigungsgurt 20 über den Reifen gelegt und mit zwei Haken 21 auf jeder Seite, die jeweils in dem Bodenblech eingehakt werden, festgemacht.

Es kann auch ein Radsicherungskeil in das Bodenblech eingesetzt werden (nicht in den Figuren gezeigt), der in den Durchbrechungen festsetzbar ist, z.B. in einer ersten und einer vierten Durchbrechung (d.h. drei Durchbrechungen liegen auf dem Wellenkamm dazwischen).

In **Fig. 9** wird ersichtlich, dass der Reifen 19 mit seinem äußeren Umfang auf dem Wellenkamm 5 mit der Durchbrechung aufsteht aber gleichzeitig auch die benachbarten Wellentäler 22 berührt. So hat der Reifen 19 maximalen Reibungskontakt.

In **Fig. 10** ist das Wellenprofil des Bodenblechs 1 skizzenhaft gezeigt. Der Reifen 19 steht auf der Aufstandsfläche 3 auf. Der Wellenkamm 5 geht kontinuierlich in die abfallende Wellenwand 6 über. Dort wo das Gefälle 0 wird (und ggf. wieder ansteigt) beginnt das Wellental 22.

In den Wellen 2 verlaufen Rippen 9 zur Verstärkung der Kanten, wie sie sich abschnittsweise entlang gegenüberliegender Seiten der Durchbrechungen 4 ergeben. Die Durchbrechungen 4 sind selbst nicht gezeigt aber mit gestrichelten Linien angedeutet. Die Durchbrechung weist ihren tiefsten Punkt auf Höhe des Wellentals auf. Die Verstärkungsrillen 9 dienen als Ausreißschutz, wenn in die Durchbrechung Haken 21 eingelegt werden und diese durch die Befestigungsgurte 20 unter Zugbelastung stehen.

Mit hi (l = links) und hᵣ (r= rechts) ist die (geringste) Höhe der jeweiligen Wellenwand 6 über der Durchbrechung bezeichnet (an der tiefsten Stelle). In der Regel beträgt diese jeweils oder im Mittel weniger als 50% der Höhe h_{wk} der Wellenkämme 5. Bevorzugt beträgt die (geringste) Höhe der Wellenwand hi und/oder hᵣ jeweils oder im Mittel 0 bis 20% der Höhe h_{wk} des Wellenkamms.

Die Wellen haben die (positive) Amplitudenbreite b_{wa} und die Wellentäler 22 die (negative) Amplitudenbreite b_{wt}. Die Breite b_{wd} der Durchbrechungen 4 entspricht nach einer Ausführungsform dem längsten Durchmesser d (der Fig. 2). Die Breite der Durchbrechungen b_{d} kann gleich der (positiven) Amplitudenbreite b_{wa} der oberen Wellenamplitude 23 sein oder kleiner, z.B. um bis zu 20% kleiner.

Die Summe über alle (positiven) Amplitudenbreiten b_{wa} und alle (negativen) Amplitudenbreiten b_{wt} entspricht der Breite des Bodenblechs an der betreffenden Stelle, jeweils senkrecht zur den Wellenkämmen.

**Bezugszeichenliste**

| | |
|---|---|
| Bodenblech | 1 |
| Wellen | 2 |
| Aufstandsfläche / Kopffläche des Bodenprofils | 3 |
| Durchbrechung | 4 |
| Wellenkamm | 5 |
| (abfallende) Wellenwand | 6 |
| parallele Kanten der Durchbrechung(en) | 7 |
| Bodenprofil | 8 |
| Rippe zur Materialverstärkung der Kante | 9 |
| Rippe | 10 |
| Stützwand | 11 |
| Stützbrücke | 12 |
| Fußfläche des Bodenprofils | 13 |
| Ausnehmung in der Fußfläche | 14 |
| Kopplungsarm | 15 |
| Kopplungssteg | 16 |
| Kopplungsschiene | 17 |
| Bodenplanke | 18 |
| Reifen | 19 |
| Befestigungsgurt | 20 |
| Haken | 21 |
| Wellental | 22 |
| obere Wellenamplitude | 23 |
| | |
| (längster) Durchmesser / Länge der Durchbrechung | d |
| Abstand der Durchbrechungen | a |
| Linke Höhe der Wellenwand über der Durchbrechung | hₗ |
| Rechte Höhe der Wellenwand über der Durchbrechung | hᵣ |
| Höhe des Wellenkamms | h_{wk} |
| Breite des Wellentals | b_{wt} |
| Breite der Durchbrechung | b_{d} |
| Breite der oberen Wellenamplitude | b_{wa} |

## Patentansprüche

1. Bodenblech (1) aufweisend eine Vielzahl von Wellen (2) und eine Vielzahl von Durchbrechungen (4),
wobei die Wellen (2) jeweils einen Wellenkamm (5) mit beidseits des Wellenkamms (5) abfallenden Wellenwänden (6) aufweisen und die Durchbrechungen (4) im Bereich des Wellenkamms (5) vorgesehen sind, **dadurch gekennzeichnet, dass**
die Durchbrechungen (4) jeweils auch zumindest eine der abfallenden Wellenwände (6) beidseits des Wellenkamms (5) abschnittsweise zumindest teilweise ausnehmen und die Durchbrechungen (4) sich jeweils nicht nur in einer Ebene befinden, sondern sich über unterschiedliche Höhen der Welle (2) erstrecken.

2. Bodenblech nach Anspruch 1, wobei die Durchbrechungen (4) beide abfallenden Wellenwände (6) beidseits des Wellenkamms (5) abschnittsweise zumindest teilweise ausnehmen, vorzugsweise im Wesentlichen vollständig.

3. Bodenblech nach zumindest einem der vorhergehenden Ansprüche, wobei die Durchbrechungen (4) zumindest jeweils auf beiden Seiten des Wellenkammes (5) zur Hauptachse der Welle bzw. des Wellenkammes (5) in etwa parallel verlaufende gerade Kanten aufweisen.

4. Bodenblech nach zumindest einem der vorhergehenden Ansprüche, wobei die Wellen (2) im Schnitt ein Wellenprofil bilden und die Wellen (2) durch abgerundete Übergänge und/oder durch winkeliges Abknicken geschaffen werden, vorzugsweise zumindest teilweise durch abgerundete Übergänge, insbesondere im Bereich der Wellenkämme (5).

5. Bodenblech nach zumindest einem der vorhergehenden Ansprüche, wobei die Durchbrechungen (4) senkrecht von oben betrachtet eine runde, ovale, rechteckige, trapezförmige oder sechseckige Form haben, insbesondere eine ovale Form mit zwei zueinander parallelen Kanten.

6. Bodenblech nach Anspruch 3, wobei die Kanten materialverstärkt sind, insbesondere weil eine Materialverdickung in Form einer Rippe (9) rechts und links parallel zum Wellenkamm (5) verläuft.

7. Bodenblech nach zumindest einem der vorhergehenden Ansprüche, wobei das Verhältnis des längsten Durchmessers bzw. der längsten Länge (d) der Durchbrechungen entlang des Wellenkamms (5) relativ zum Abstand (a) der Durchbrechungen (4) entlang des Wellenkamms (5) von 1: 4 bis 4:1, vorzugsweise etwa 3 :1 bis 1 : 1, beträgt.

8. Bodenprofil (8) aufweisend das Bodenblech (1) nach zumindest einem der vorhergehenden Ansprüche, wobei die Kopffläche des Bodenprofils (8) von dem Bodenblech (1) gebildet wird und auf der der Aufstandsfläche gegenüberliegenden Seite des Bodenblechs (1) Stützglieder vorgesehen sind, die sich von dem Bodenblech (1) wegerstrecken, wobei die Stützglieder eine Fußfläche mit dem Bodenprofil (13) verbinden und die Stützglieder vorzugsweise als Stützwände (11) ausgebildet sind, die parallel zu den Wellenkämmen (5) verlaufen.

9. Bodenprofil nach Anspruch 8, wobei das Bodenprofil (8) selbsttragend ist.

10. Bodenplanken (18) herstellbar durch aneinanderlegen, insbesondere Aneinanderkoppeln, mehrerer Bodenprofile (8) nach Anspruch 8 oder 9, insbesondere mehrerer gleicher Bodenprofile (8).

11. Anhänger oder Kraftfahrzeug, insbesondere Lastkraftwagen, aufweisend die Bodenbleche (1), Bodenprofile (8) oder Bodenplanken (18) nach einem der vorherigen Ansprüche, wobei die Bodenbleche (1) bzw. Bodenprofile (8) die Ladefläche bilden und insbesondere das Bodenblech (1) mit der Vielzahl von Wellen (2) und Durchbrechungen (4) die Aufstandsfläche für Reifen (19) der mit dem Anhänger oder Kraftfahrzeug zu transportierenden Fahrzeuge.

12. Verwendung der Bodenbleche (1), Bodenprofile (8) oder Bodenplanken (18) nach zumindest einem der vorhergehenden Ansprüche 1 bis 10 für den Transport, das Überfahren oder die Lagerung von/durch Fahrzeuge(n) mit Reifen (19) auf diesen.

## Claims

1. A floor panel (1) comprising a plurality of corrugations (2) and a plurality of through holes (4),
wherein the corrugations (2) each comprise a corrugation crest (5) having corrugation walls (6) slanting downward on both sides of the corrugation crest (5), and the through holes (4) are provided in the region of the corrugation crest (5),
**characterized in that**
the through holes (4) each moreover break through at least partially at least one of the slanting corrugation walls (6) on both sides of the corrugation crest (5) section wise, and the through holes (4) each are not only located in one plane but extend across different heights of the corrugation (2).

2. The floor panel according to claim 1, wherein the through holes (4) break through at least partially both of the slanting corrugation walls (6) on both sides of the corrugation crest (5) section wise, and preferably break through the slanting corrugation walls (6) on both sides substantially complete.

3. The floor panel according to at least one of the preceding claims, wherein the through holes (4) comprise straight edges extending approximately parallel to the main axis of the corrugation or the corrugation crest (5) at least on both sides of the corrugation crest (5).

4. The floor panel according to at least one of the preceding claims, wherein the corrugations (2) form a corrugation profile in cross-section and the corrugations (2) are created by rounded transitions and/or by angularly bending, preferably at least partially by rounded transitions, in particular in the region of the corrugation crests (5).

5. The floor panel according to at least one of the preceding claims, wherein the through holes (4) comprise a round, oval, rectangular, trapezoidal or hexagonal shape, as viewed vertically from above, in particular an oval shape with two edges parallel to each other.

6. The floor panel according to claim 3, wherein the edges are material-reinforced, in particular because a material thickening in the form of a rib (9) runs parallel to the corrugation crest (5) on the right and left side.

7. The floor panel according to at least one of the preceding claims, wherein the ratio of the longest diameter or the longest length (d) of the through holes along the corrugation crest (5) relative to the distance (a) of the through holes (4) along the corrugation crest (5) is from 1:4 to 4:1, preferably about 3:1 to 1:1.

8. A floor profile (8) comprising the floor panel (1) according to at least one of the preceding claims, wherein the top surface of the floor profile (8) is formed by the floor panel (1) and support members extending away from the floor panel (1) are provided on the side of the floor panel (1) opposite to the resting surface , wherein the support members connect a bottom surface (13) to the floor profile and the support members are preferably formed as support walls (11) extending parallel to the corrugation crests (5).

9. The floor profile according to claim 8, wherein the floor profile (8) is self-supporting.

10. Floor planks (18) obtainable by placing a plurality of floor profiles (8) according to claims 8 or 9, in particular a plurality of identical floor profiles (8), adjacent to each other, in particular by coupling them with each other.

11. A trailer or motor vehicle, in particular a truck, comprising the floor panels (1), floor profiles (8) or floor planks (18) according to one of the preceding claims, wherein the floor panels (1) or floor profiles (8) form the loading surface, respectively, and in particular the floor panel (1) having the plurality of corrugations (2) and through holes (4) forming the resting surface for tires (19) of the vehicles to be transported with the trailer or motor vehicle.

12. Use of the floor panels (1), floor profiles (8) or floor planks (18) according to at least one of the preceding claims 1 to 10 for the transport, overrun or storage of/by vehicles with tires (19) thereon.

## Revendications

1. Tôle de fond (1) présentant une pluralité d'ondulations (2) et une pluralité de perforations (4),
dans laquelle les ondulations (2) présentent respectivement une crête d'ondulation (5) pourvue de parois d'ondulation (6) retombant des deux côtés de la crête d'ondulation (5) et les perforations (4) sont prévues dans la zone de la crête d'ondulation (5), **caractérisée en ce que** les perforations (4) évident, respectivement, au moins partiellement par endroits aussi au moins l'une des parois d'ondulation (6) retombant des deux côtés de la crête d'ondulation (5) et les perforations (4) ne se trouvent respectivement pas seulement sur un plan, mais s'étendent sur différentes hauteurs de l'ondulation (2).

2. Tôle de fond selon la revendication 1, dans laquelle les perforations (4) évident au moins partiellement par endroits les deux parois d'ondulation (6) retombant des deux côtés de la crête d'ondulation (5), de préférence sensiblement entièrement.

3. Tôle de fond selon au moins l'une des revendications précédentes, dans laquelle les perforations (4) présentent respectivement au moins des deux côtés de la crête d'ondulation (5) par rapport à l'axe principal de l'ondulation et/ou de la crête d'ondulation (5) des bords droits à peu près parallèles.

4. Tôle de fond selon au moins l'une des revendications précédentes, dans laquelle les ondulations (2) forment en coupe un profilé d'ondulation et les ondulations (2) sont créées par des transitions arrondies et/ou des coudes angulaires, de préférence au moins partiellement par des transitions arrondies, en particulier dans la zone des crêtes d'ondulation (5).

5. Tôle de fond selon au moins l'une des revendications précédentes, dans laquelle les perforations (4) ont une forme arrondie, ovale, rectangulaire, trapézoïdale ou hexagonale, vu à la perpendiculaire à partir du haut, en particulier une forme ovale comportant deux bords parallèles deux à deux.

6. Tôle de fond selon la revendication 3, dans laquelle les bords sont renforcés par du matériau, en particulier parce qu'un épaississement de matériau sous la forme d'une âme (9) est parallèle à la crête d'ondulation (5) à droite et à gauche.

7. Tôle de fond selon au moins l'une des revendications précédentes, dans laquelle le rapport du diamètre le plus gros et/ou de la longueur la plus grande (d) des perforations le long de la crête d'ondulation (5) à la distance (a) des perforations (4) le long de la crête d'ondulation (5) est de 1:4 à 4:1, de préférence d'environ 3:1 à 1:1.

8. Profilé de fond (8) présentant la tôle de fond (1) selon au moins l'une des revendications précédentes, dans lequel la surface avant du profilé de fond (8) est formée par la tôle de fond (1) et des éléments d'appui qui s'étendent depuis la tôle de fond (1) sont prévus sur la face de la tôle de fond (1) opposée à la surface d'appui, les éléments d'appui reliant une surface d'empiétement au profilé de fond (13) et les éléments d'appui étant formés de préférence en tant que parois d'appui (11) qui sont parallèles aux crêtes d'ondulation (5).

9. Profilé de fond selon la revendication 8, le profilé de fond (8) étant auto-portant.

10. Plancher (18) pouvant être fabriqué par pose jointive, notamment par accouplement, de plusieurs profilés de fond (8) selon la revendication 8 ou 9, en particulier plusieurs profilés de fond (8) identiques.

11. Remorque ou véhicule motorisé, en particulier poids lourd, présentant les tôles de fond (1), les profilés de fond (8) ou les planchers (18) selon l'une des revendications précédentes, les tôles de fond (1) et/ou les profilés de fond (8) formant la surface de chargement et en particulier la tôle de fond (1) pourvue de la pluralité d'ondulations (2) et de perforations (4) formant la surface de repos pour des pneus (19) des véhicules à transporter avec la remorque ou le véhicule motorisé.

12. Utilisation des tôles de fond (1), des profilés de fond (8) ou des planchers (18) selon au moins l'une des revendications précédentes 1 à 10 pour le transport, le transvasement ou le chargement de/par un ou plusieurs véhicules ayant des pneus (19) sur ceux-ci.
